# EUROPEAN PATENT APPLICATION

(11) **EP 3 599 553 A1**
(43) Date of publication of application: **29.01.2020**
(21) Application number: 18185928.1
(22) Date of filing: 27.07.2018
(51) Int. Cl.: G06F 11/36

(54) **METHOD, COMPUTER PROGRAM PRODUCT AND DEVICE FOR RECOGNIZING A WEAK POINT IN AN ORIGINAL PROGRAM**

(71) Applicant: Siemens Aktiengesellschaft, 80333 München (DE)
(72) Inventor: Lehmberg, Sven, 85521 Riemerling (DE); Stijohann, Jan, 81827 München (DE)

(57) **Abstract**

The method includes: executing the original program and a test program in parallel on identical input data in a runtime environment, detecting, while the original program and the test program are executed in parallel, an event of receiving one of a number of determined pieces of input data, providing, for each of the detected events, a test fork including a copy of a certain part of code of the test program being configured for processing the received determined piece of input data and a current copy of the runtime environment, obtaining a test information characterizing an execution of the provided test fork, and determining whether the original program has a weak point based on the test information.

Weak points can be determined dynamically, without having to perform a time-consuming testing in an artificial test environment.

## Description

The present invention relates to a method and to a computer program product for recognizing a weak point in an original program using a test program. Moreover, the present invention relates to a device for recognizing a weak point in an original program using a test program.

It can be desired to perform tests on a newly developed original program to recognize its weak points and make sure it functions as expected. The original program can for example be tested in an artificial test environment, in which artificially created data is used as an input when executing the original program. The result of the test performed in the artificial test environment may then be analyzed by a security analyst to detect weak points of the original program.

It is one object of the present invention to improve a recognition of a weak point in an original program.

According to a first aspect, a method for recognizing a weak point in an original program using a test program is provided, the original program being configured to perform a predetermined function on input data when executed in a predetermined runtime environment and the test program being configured to execute the same predetermined function on the input data when executed in the predetermined runtime environment as the original program. The method comprises:
executing the original program and the test program in parallel on identical input data in the predetermined runtime environment,
detecting, while the original program and the test program are executed in parallel, an event of receiving one of a number of determined pieces of input data,
providing, for each of the detected events, a test fork including a copy of a certain part of code of the test program being configured for processing the received determined piece of input data and a current copy of the predetermined runtime environment,
obtaining a test information characterizing an execution of the provided test fork, and
determining whether the original program has a weak point based on a comparison of the test information with a predetermined weak point information indicating conditions for recognizing weak points.

The predetermined runtime environment may be the environment in which the original and/or the test program and/or the test forks can successfully be executed. To successfully execute the original and/or test program and/or the test forks, the predetermined runtime environment in particular comprises adequate libraries, subsystems such as databases, network infrastructures and the like.

The original program may comprise a set of instructions that perform the predetermined function when executed in the predetermined runtime environment. For example, the predetermined function can be a calculation realized with data from a sensor in an industrial network. The original program can be stored on a hardware entity to form an original device. The original program itself may be software.

The test program may comprise the same set of instructions as the original program. In particular, when executed, the test program can perform all the functions that the original program can perform. The test program may be seen as a copy of the original program. Beyond being configured to execute the same functions as the original program when executed, the test program may also execute additional functions such as testing functions, which will be described below. The test program can be stored on a hardware entity to form a test device, or it can be stored on the same hardware as the original device. The test program itself may be software.

If a certain piece of input data is received, an event is detected, in particular corresponding to a security-relevant state.

Detecting such an event triggers the forking, namely the providing of a test fork from the test program. In other words, the test fork is a forked instance of the test program taking into account the current states of the original program and/or the test program. The identification of these states may take into account program addresses and/or call stacks used by the original program. By identifying and storing these states, it may be prevented that a same start state is used more than once.

The respective detected event as the trigger for the forking is a real seed because it is based on receiving real data, e.g. real sensor data.

On each test fork forked in response on said real seed, active and dynamic security tests may be proceeded, in particular based on the last state of the test program that was the basis of the test program the has been forked.

As a result, active and dynamic testing on the respective test fork is possible in the predetermined runtime environment.

Because the present method only uses real input data, e.g. real sensor data, the test range is downsized compared to conventional solutions, in particular because only real and security relevant states and code parts may be tested.

The test program and/or the test forks may constantly be run or executed in parallel to the original program. In the present application, "in parallel" in particular means at the same time and with the same input data. In particular, the test program and/or the test forks receives the same input data as the original data and performs the same predetermined function, for example a same calculation. In embodiments, the input data can initially be provided to the original program and then be transmitted to the test program and/or the test forks, the input data can initially be provided to the test program and/or the test forks and then be transmitted to the original program, or the input data can be provided to both the original and the test program at the same time, for example through an interface, in particular through a broadcast interface.

In particular, when the test program is executed, it accesses the same libraries and databases from the predetermined runtime environment as the original program and uses the information from the libraries and databases in the same way as the original program. The test program can be run or executed in the same runtime environment as the original program.

The test information may be generated upon execution of the test fork. The test information may indicate how the test fork is executed. In particular, it tracks events occurring when the test fork is executed. Test information examples will be discussed further below.

A weak point may be a flaw in the original and/or test program, in particular in the code thereof. For example, if the predetermined function cannot be executed as expected for given input data, a weak point is detected. For example, a weak point is recognized upon occurrence of race conditions, insecure application programming interface (API) usage, infinite loops killed by a watchdog timer, raised exceptions and the like.

The predetermined weak point information may indicate the conditions or requirements for recognizing weak points. In particular, the predetermined weak point information is stored in advance in a storage device such as a ROM. The predetermined weak point information may indicate that a weak point is to be recognized when a particularly unusual test information is obtained. For example, the predetermined weak point information indicates that the test program has a weak point if a same event, such as storing or encrypting, is repeated several times. In embodiments, a weak point is recognized when the obtained test information matches the conditions of the predetermined weak point information. Alternatively, a negative logic may be applied.

In particular, since the test fork and the original program are executed in parallel, when a weak point is detected in the test fork, the same weak point is also present in the original program.

In particular, the runtime environment is a real environment in which the original program is to be run for a predetermined application rather than an artificial test environment. The weak point of the original program may thus be recognized in the real environment.

Testing of the original program may be dynamically performed while the original program is running. As the testing is performed using a test program and the test forks, one can speak of a "passive testing".

The original program may be tested in the "real" runtime environment with the "real" libraries, databases and the like. The testing is improved as compared to a test performed on an artificial test environment, because the artificial test environment never covers all possible applications of the original program. Further, testing of the original program may be simplified because there is no need for providing an artificial test environment and for generating artificial input data. Moreover, the testing may be performed with real data rather than with test data, thereby increasing the completeness of the tests significantly.

In particular, testing of the original program according to the method of the first aspect is also less time consuming than testing the original program in an artificial test environment because the testing can be performed while executing the original program.

Furthermore, the testing of the original program is not performed on the original program itself. Rather, it may be performed on the test fork running in parallel to the original program, thereby avoiding that the original program runs slow or crashes.

According to an embodiment, the original program, the test program and the number of test forks are executed independently from each other. In particular, the original program, the test program and the number of test forks are not influenced by the execution of each other.

According to a further embodiment, the provided test fork is executed using fuzzing or concolic testing for obtaining the test information.

According to a further embodiment, the method according to the first aspect further comprises:
logging events occurring when executing the test fork to obtain log entries as the test information.

In particular, a logging of the events occurring when executing the test fork is performed. The logging can be part of the step of obtaining the test information. The events occurring when executing the test fork may be safety relevant events. The events can include a storing, an encrypting, a decrypting, a receiving and/or a sending of data, as well as parameters relating thereto.

In embodiments, the logging is performed as the respective test fork is executed. In particular, the logging functionality is part of the test fork.

The logging may point out relevant information regarding weak points of the original and/or test program. The result of the logging may be expressed as log entries. The log entries can be a list of relevant events. The log entries can form and/or be part of the already described test information.

According to a further embodiment, the method according to the first aspect further comprises:
monitoring the log entries to recognize a weak point of the original program.

The monitoring may be a permanent analysis of the log entries. For example, the monitoring allows recognizing particular patterns in an order of the logged events, thereby recognizing a race condition or an insecure API usage as a weak point. The monitoring functionality may be part of the test fork.

According to a further embodiment, the test information comprises at least:
an execution time of a predetermined section of the certain part of code of the test fork,
an exception occurring when executing the test fork, and/or
an order of events occurring when executing the test fork.

In particular, a weak point is recognized when the test information is unusual and/or corresponds to the conditions set by the predetermined weak point information.

The test information may include the execution time of a predetermined section of the certain part of code of the test fork. If the execution time is higher or lower than expected, a weak point may be detected in view of the predetermined weak point information. For example, it can be determined that infinite loops have been killed by a watchdog timer.

The test information can further include the order of events occurring when executing the test fork. For example, it can indicate that a reception of data occurred first, followed by a decryption, and then by a storing. If the order of events is unusual in view of the predetermined weak point information, a weak point may be recognized.

According to a further embodiment, the method according the first aspect further comprises:
providing a user with a warning information indicating that a weak point has been recognized if it is determined that the original program has a weak point.

The warning information may include the test information, in particular the relevant part in view of the detected weak point. For example, the log entries relevant to the detected weak point are included in the warning information. The warning information can also include the input data that led to the detection of this weak point.

The warning information can be provided to an address within or outside a network in which the original and test programs are executed. The user may evaluate the warning information, in particular manually. The warning information can also be an alarm informing the user of a weak point.

By receiving the warning information, the user may become aware that a weak point has been found and/or may evaluate the weak point. In particular, the user can then take measures against the detected weak point. For example, depending on the result of the evaluation, the user may decide to update the original and/or test program, to inform the manufacturer of the original program about the weak point, to avoid inputting input data that the original program cannot deal with or the like.

According to a further embodiment, the method according the first aspect further comprises:
updating the original program and/or the test program in view of a recognized weak point.

In particular, the original program and the test program can be updated to resolve the detected weak point. For example, the code of the original and/or test program can be changed such as to change how the predetermined function is performed. Thereby, the original program can be improved.

The testing functionality of the test fork and/or the test program can be updated. For example, the manufacturer of the test program can provide such updates for the test program. It is also possible that the test program itself initiates such updates, in particular in view of learnt patterns.

In embodiments, the predetermined weak point information can also be updated to provide new conditions for recognizing weak points.

According to a further embodiment, the execution of the provided test fork is stopped after a certain time, after a certain number of executed instructions, after having reached a certain code coverage rate, if a certain weak point is recognized, if the test fork is in a certain state and/or if a certain number of test forks is provided.

According to a further embodiment, for each of the detected events, a state of the original program and/or the test program is detected and stored.

According to a further embodiment, the stored states of the original program and/or the test program are used for the step of determining whether the original program has a weak point.

According to a further embodiment, the step of receiving one of a number of determined pieces of input data includes receiving a data packet from a network, receiving data as a response to a read operation to a database or to a file and/or receiving input data from a user interface, in particular from a graphical user interface.

According to a further embodiment, the original program, the test program and the number of test forks are stored on a same hardware entity, or the original program and the test program are stored on different hardware entities.

According to a further embodiment, the test program is run on a virtual machine and the test fork is provided into a copy of the virtual machine.

According to a second aspect, a computer program product comprising a program code for executing the method according to the first aspect or according to an embodiment of the first aspect is provided.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a device for recognizing a weak point in an original program using a test program is provided, the original program being configured to perform a predetermined function on input data when executed in a predetermined runtime environment and the test program being configured to execute the same predetermined function on the input data when executed in the predetermined runtime environment as the original program. The device comprises:
an execution entity for executing the original program and the test program in parallel on identical input data in the predetermined runtime environment,
a detecting entity for detecting, while the original program and the test program are executed in parallel, an event of receiving one of a number of determined pieces of input data,
a providing entity for providing, for each of the detected events, a test fork including a copy of a certain part of code of the test program being configured for processing the received determined piece of input data and a current copy of the predetermined runtime environment,
an obtaining entity for obtaining a test information characterizing an execution of the provided test fork, and
a determination entity for determining whether the original program has a weak point based on a comparison of the test information with a predetermined weak point information indicating conditions for recognizing weak points.

The execution entity, the detecting entity, the providing entity, the obtaining entity and the determination entity may be implemented in hardware and/or in software. If a respective entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

According to an embodiment, the device according to the third aspect is configured to execute the method according to the first aspect.

The embodiments and features described with reference to the method according to the first aspect apply mutatis mutandis to the test program according to the second aspect and to the device according to the third aspect of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages will become apparent from the subsequent description and dependent claims, taken in conjunction with the accompanying drawings, in which:
- Fig. 1: shows an example of a system with an original program a test program and test forks,
- Fig. 2: shows a method for recognizing a weak point in an original program according to an embodiment, and
- Fig. 3: shows a device for recognizing a weak point in an original program according to an embodiment.

In the Figures, like reference numerals designate like or functionally equivalent elements, unless otherwise indicated.

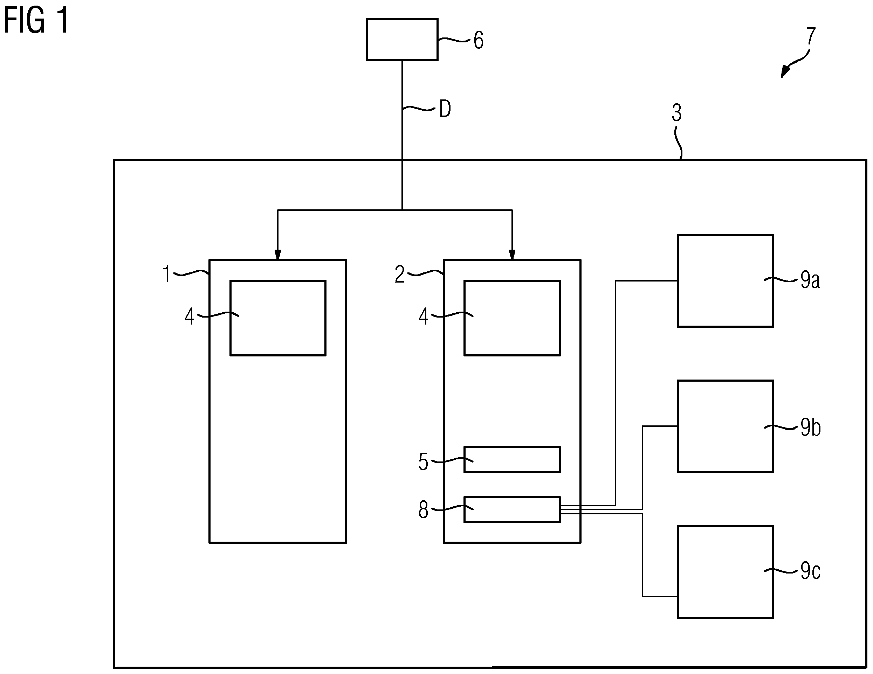

Fig. 1 shows an example of a system 7 comprising an original program 1 and a test program 2. The original program 1 and the test program 2 may include computer programs made of software code.

The original program 1 and the test program 2 can both be executed in a predetermined runtime environment 3. For example, the predetermined runtime environment 3 may be a real product environment.

For this purpose, both the original program 1 and the test program 2 receive input data D from an interface 6. The input data D may include real sensor data measured by a sensor in an industrial network and/or data traffic, e.g. data packets transferred over a network (not shown).

When executed in the runtime environment 3, the original program 1 and the test program 2 perform a same predetermined function 4 on the input data D. The predetermined function 4 performed on the input data D may be a mathematic evaluation of the input/sensor data D. The mathematical evaluation includes retrieving additional data from a database, performing a mathematical operation on the input data D using the additional data, and storing the result.

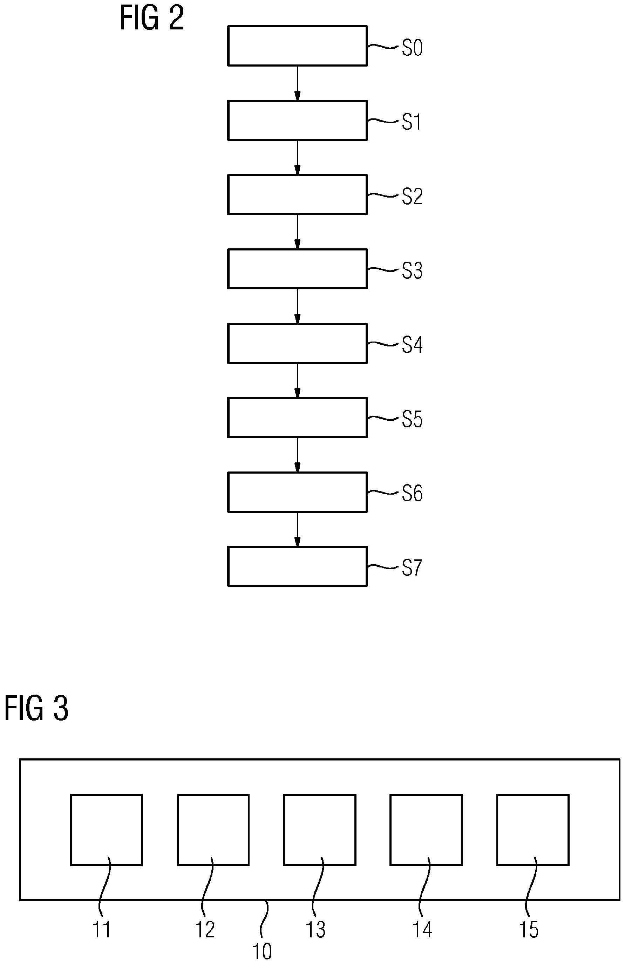

The system 7 of Fig. 1 is configured to execute a method for recognizing a weak point in an original program 1 according to an embodiment as shown in Fig. 2. In the following, it will be described how the test program 2 of Fig. 1 can be used to recognize a weak point in the original program 1.

In an initialization step S0 of Fig. 2, the system 7 of Fig. 1 including the original program 1 and test program 2 is provided. The original program 1 may be also referenced as system under test (SUT, system under test), wherein the test program 2 may be also referenced as twin, being a twin of said original program 1.

In step S1, the original program 1 and the test program 2 are executed in parallel on identical input data D received over the interface 6 in the predetermined runtime environment 3.

In step S2, while the original program 1 and the test program 2 are executed in parallel, an event of receiving one of a number of predetermined pieces of input data D is detected. For providing this detecting, the test program 2 may comprise an event monitor 5. Said event monitor 5 may provide said detecting functionality. In particular, receiving one of a number of predetermined pieces of input data D may include receiving a data package from a data packet from a network, receiving data as a response to a read operation to a database or to a file and/or receiving input data from a user interface. The user interface may be a graphical user interface (GUI), for example.

In step S3, for each of the detected events of step S2, a test fork 9a - 9c including a copy of a certain part of code of the test program 2 being configured for processing the received determined piece of input data D and a current copy of the predetermined runtime environment 3 is provided.

Without loss of generality, the example of Fig. 1 shows three test forks indicated by 9a, 9b and 9c. In particular, in said runtime environment 3, there may be place for a plurality of different test forks, said number may be, for example, 20. For providing said test forks 9a - 9c and for managing the test forks 9a - 9c, the test program 2 may include a test fork manager 8 which provides the functionality of providing and managing said test forks 9a - 9c.

In step S4, a test information characterizing an execution of the provided test fork(s) 9a - 9c is obtained.

It may be noted that the original program 1, the test program 2 and the number of test forks 9a - 9c may be executed independently from each other. For example, the provided test fork 9a - 9c is executed using fuzzing or concolic testing for obtaining the test information. The test information may include at least an execution time of a predetermined section of the certain part of code of the test fork 9a - 9c, an exception occurring when executing the test fork 9a - 8c, and an order of events occurring when executing the test fork 9a - 9c.

In particular, the execution of the provided test fork 9a - 9c may be stopped after a certain time, after a certain number of executed instructions, after having reached a certain code coverage rate, if a certain weak point is recognized, if the test fork 9a - 9c is in a certain state and/or if a certain number of test forks 9a - 9c is provided.

In step S5, it is determined whether the original program 1 has a weak point based on a comparison of the test information with a predetermined weak point information indicating conditions for recognizing weak points.

In particular, for each of said detected events, a state of the original program 1 and/or the test program 2 is detected and stored. The stored states of the original program 1 and/or the test program 2 may be used for said step of determining S5 whether the original program 1 has a weak point.

In step S6, a user is provided with a warning information indicating that a weak point has been recognized, if it is determined in step S5 that the original program 1 has a weak point.

In step S7, the original program 1 and/or the test program 2 may be updated in view of a recognized weak point.

Fig. 3 shows a device 10 for recognizing a weak point in an original program 1 using a test program 2 according to an embodiment. The original program 1 is configured to perform a predetermined function 4 on input data D when executed in a predetermined runtime environment 3, and the test program 2 is configured to execute the same predetermined function 4 on the input data D when executed in the predetermined runtime environment 3 as the original program 1.

The device 10 includes an execution entity 11, a detecting entity 12, a providing entity 13, an obtaining entity 14 and a determination entity 15.

The execution entity 11 is configured to execute the original program 1 and the test program 2 in parallel on identical input data D in the predetermined runtime environment 3. The input data D may be received by an interface 6 (see Fig. 1).

The detecting entity 12 is configured to detect, while the original program 1 and the test program 2 are executed in parallel, an event of receiving one of a number of determined pieces of input data D.

The providing entity 13 is configured to provide, for each of the detected events, a test fork 9a - 9c including a copy of a certain part of code of the test program 2 being configured for processing the received determined piece of input data D and a current copy of the predetermined runtime environment 3.

The obtaining entity 14 is configured to obtain a test information characterizing an execution of the provided test fork 9a - 9c.

The determination entity 15 is configured to determine whether the original program 1 has a weak point based on a comparison of the test information with a predetermined weak point information indicating conditions for recognizing weak points.

Although the present invention has been described in accordance with preferred embodiments, it is obvious for the person skilled in the art that modifications are possible in all embodiments. For example, the predetermined function executed by the original program 1 and the test program 2 are not limited to those described in view of Fig. 1. Further, the event monitor 5 is not necessarily part of the test program 2, rather, it can be provided as a separate program/functionality. The test information can be any type of information relating to the execution of the test fork 9a - 9c, for example an execution time of a part of code of the test program 2. Further, the steps S1, S2, S3 and S4 can be performed dynamically and at the same time such that a weak point is recognized as the programs 1, 2 are being executed. Moreover, the entities 11, 12 and 13 of the device 10 can be realized as hardware entities.

## Claims

1. A method for recognizing a weak point in an original program (1) using a test program (2), the original program (1) being configured to perform a predetermined function (4) on input data (D) when executed in a predetermined runtime environment (3) and the test program (2) being configured to execute the same predetermined function (4) on the input data (D) when executed in the predetermined runtime environment (3) as the original program (1), the method comprising:
executing (S1) the original program (1) and the test program (2) in parallel on identical input data (D) in the predetermined runtime environment (3),
detecting (S2), while the original program (1) and the test program (2) are executed in parallel, an event of receiving one of a number of determined pieces of input data (D),
providing (S3), for each of the detected events, a test fork (9a-9c) including a copy of a certain part of code of the test program (2) being configured for processing the received determined piece of input data (D) and a current copy of the predetermined runtime environment (3),
obtaining (S4) a test information characterizing an execution of the provided test fork (9a-9c), and
determining (S5) whether the original program (1) has a weak point based on a comparison of the test information with a predetermined weak point information indicating conditions for recognizing weak points.

2. The method according to claim 1,
wherein the original program (1), the test program (2) and the number of test forks (9a-9c) are executed independently from each other.

3. The method according to claim 1 or 2,
wherein the provided test fork (9a-9c) is executed using fuzzing or concolic testing for obtaining the test information.

4. The method according to one of claims 1 to 3,
wherein the test information includes at least:
an execution time of a predetermined section of the certain part of code of the test fork (9a-9c),
an exception occurring when executing the test fork (9a-9c), and/or
an order of events occurring when executing the test fork.

5. The method according to one of claims 1 to 4,
further comprising:
providing (S6) a user with a warning information indicating that a weak point has been recognized if it is determined that the original program (1) has a weak point.

6. The method according to one of claims 1 to 5,
further comprising:
updating (S7) the original program (1) and/or the test program (2) in view of a recognized weak point.

7. The method according to one of claims 1 to 6,
wherein the execution of the provided test fork (9a-9c) is stopped after a certain time, after a certain number of executed instructions, after having reached a certain code coverage rate, if a certain weak point is recognized, if the test fork (9a-9c) is in a certain state and/or if a certain number of test forks (9a-9c) is provided.

8. The method according to one of claims 1 to 7,
wherein, for each of the detected events, a state of the original program (1) and/or the test program (2) is detected and stored.

9. The method according to claim 8,
wherein the stored states of the original program (1) and/or the test program (2) are used for the step of determining (S5) whether the original program (1) has a weak point.

10. The method according to one of claims 1 to 9,
wherein receiving one of a number of determined pieces of input data (D) includes receiving a data packet from a network, receiving data as a response to a read operation to a database or to a file and/or receiving input data from a user interface, in particular from a graphical user interface.

11. The method according to one of claims 1 to 10,
wherein the test program (2) is run on a virtual machine and the test fork (9a-9c) is provided into a copy of the virtual machine.

12. The method according to one of claims 1 to 11,
wherein the predetermined runtime environment (3) is a real productive environment.

13. A computer program product comprising a program code for executing the method according to one of claims 1 to 12.

14. A device (10) for recognizing a weak point in an original program (1) using a test program (2), the original program (1) being configured to perform a predetermined function (4) on input data (D) when executed in a predetermined runtime environment (3) and the test program (2) being configured to execute the same predetermined function (4) on the input data (D) when executed in the predetermined runtime environment (3) as the original program (1), the device (10) comprising:
an execution entity (11) for executing the original program (1) and the test program (2) in parallel on identical input data (D) in the predetermined runtime environment (3),
a detecting entity (12) for detecting, while the original program (1) and the test program (2) are executed in parallel, an event of receiving one of a number of determined pieces of input data (D),
a providing entity (13) for providing, for each of the detected events, a test fork (9a-9c) including a copy of a certain part of code of the test program (2) being configured for processing the received determined piece of input data (D) and a current copy of the predetermined runtime environment (3),
an obtaining entity (14) for obtaining a test information characterizing an execution of the provided test fork (9a-9c), and
a determination entity (15) for determining whether the original program (1) has a weak point based on a comparison of the test information with a predetermined weak point information indicating conditions for recognizing weak points.
